(19) 

Europäisches
Patentamt
European
Patent Office
Office européen
des brevets

(11) **EP 4 418 076 A1**

(12) **EUROPEAN PATENT APPLICATION**

(43) Date of publication:
**21.08.2024 Bulletin 2024/34**

(21) Application number: **24152928.8**

(22) Date of filing: **19.01.2024**

(51) International Patent Classification (IPC):
**G06F 3/01** *(2006.01)*  **G02B 27/00** *(2006.01)*
**G09G 5/391** *(2006.01)*  **G02B 27/01** *(2006.01)*
**G06T 15/00** *(2011.01)*

(52) Cooperative Patent Classification (CPC):
**G06F 3/011; G02B 27/0093; G06F 3/013;
G06T 15/10; G09G 5/391;** G02B 2027/0147;
G06T 2210/36

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023 GB 202302127**

(71) Applicant: **Sony Interactive Entertainment Inc.
Tokyo 108-0075 (JP)**

(72) Inventors:
- **LEYTON, Pedro**
  **London, W1F 7LP (GB)**
- **VISCIGLIA, Aron**
  **London, W1F 7LP (GB)**
- **UBERTI, David**
  **London, W1F 7LP (GB)**
- **STEMPLE, Lloyd**
  **London, W1F 7LP (GB)**
- **WALKER, Andrew**
  **London, W1F 7LP (GB)**

(74) Representative: **D Young & Co LLP
3 Noble Street
London EC2V 7BQ (GB)**

(54) **GRAPHICS RENDERING APPARATUS AND METHOD**

(57)    A graphics rendering apparatus, comprising: a rendering unit configured to render image content for display on a display screen; an input unit configured to receive one or more images of one or both eyes of a user; and a gaze tracking unit configured to determine, based on one or more of the received images, a region of the display screen towards which a gaze of the user is directed; wherein the rendering unit is configured to execute, in dependence upon the determined region of the display screen, one or more computational processes that are expected to cause a visual discontinuity to occur within at least a part of the image content, wherein the rendering unit is configured to execute the one or more computational processes with respect to one or more parts of the image content that correspond to one or more regions of the display screen that are different from the determined region of the display.

| Rendering Unit 200 | Input Unit 202 | Gaze Tracking Unit 204 | Blink Prediction Unit 206 |

*Figure 2*

EP 4 418 076 A1

**Description**

Field of Invention

The present invention relates to a graphics rendering apparatus and method.

Background

Interactive content such as video games, virtual/augmented/mixed reality applications, and the like provide users with immersive experiences, such immersiveness arising not least because of the visual aspects of the interactive content (the appearances of virtual objects/characters/environments, for example). In order to generate such immersive visuals, one or more graphics rendering processes such as texturing, shading, colouring, and the like are typically performed by CPU(s) and/or GPU(s) on meshes which define the geometry of virtual objects, characters and/or environments within the interactive content.

Certain rendering processes, while being relied upon for generating highly realistic/detailed appearances of virtual elements (virtual objects/characters/environments), and thereby providing immersive user experiences, may cause the user to experience a break in immersion or even feel discomfort or nausea when utilised. As a non-limiting example, draw calls are typically used to apply the appropriate shading, texturing, colouring to a given virtual element. Typically, there is a positive correlation between the number of draw calls applied to a given virtual element, and a more realistic/detailed appearance of that virtual element.

However, changes in the level of detail associated with a virtual element can cause the texture and/or the resolution of the virtual element to suddenly change. Moreover, such changes may cause, the frame rate to decrease due to the increased processing burden upon the image rendering device - this becomes increasingly apparent in the case where an increasingly greater number of virtual elements are to be rendered. Consequently, the user may no longer be immersed in the interactive content, and may even feel discomfort or nausea; the sudden change in texture/resolution may be a jarring visual experience for the user, or the drop in frame rate may induce nausea due to the rough, jarring motion of the virtual elements. Similar concerns may also be associated with a number of other rendering processes, in which a user experiences a negative impact upon the display of content due to the processing being performed.

The present invention seeks to alleviate or mitigate this issue.

Summary of the Invention

In a first aspect, a graphics rendering apparatus is provided in claim 1.

In another aspect, a graphics rendering method is provided in claim 12.

Further respective aspects and features of the invention are defined in the appended claims.

Embodiments of the present invention will now be described by way of example with reference to the accompanying drawings, in which:

- Figure 1 schematically illustrates an entertainment system operable as a graphics rendering apparatus according to embodiments of the present description;
- Figure 2 schematically illustrates a graphics rendering apparatus according to embodiments of the present description;
- Figure 3 schematically illustrates an example of image content output from a video game; and
- Figure 4 schematically illustrates a graphics rendering method according to embodiments of the present description.

Description of the Embodiments

A graphics rendering apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system is a non-limiting example of such a graphics rendering apparatus.

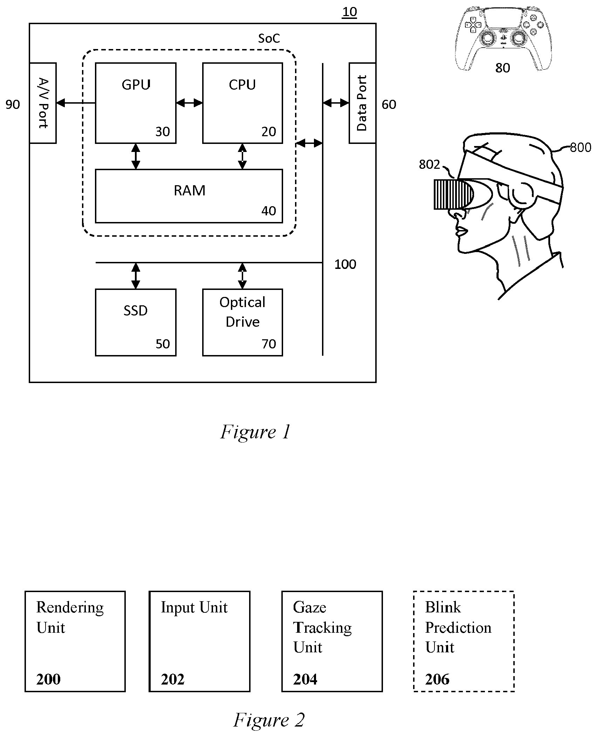

Referring to Figure 1, an example of an entertainment system 10 is a computer or console such as the Sony ® PlayStation 5 ® (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ® port, Wi-Fi ® port, Bluetooth ® port or similar, as appropriate. It may also optionally receive data via an optical drive 70.

Interaction with the system is typically provided using one or more handheld controllers 80, such as the DualSense ® controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

As will be appreciated by persons skilled in the art, given that a finite amount of computational resources are typically used to render interactive content for display, rendering processes such as generating or executing draw calls, changing the level of detail/location/presence of a virtual element's mesh, frame rate synchronisation, and the like are typically executed and terminated dynamically in order to efficiently allocate computational resources.

For example, while playing a video game, a user's in-game character may be situated proximate to a building (standing on a pavement/sidewalk which abuts the building, for example). In this case, the level of detail of the building's mesh should ideally be the highest available level of detail in order to ensure the appearance of the building is realistic/detailed for viewer immersion purposes. However, as the user moves away from the building, the level of detail of the rendering applied to the mesh may be reduced accordingly, as the user is less likely to appreciate a highly detailed building from increasingly greater distances. Subsequently, the relatively higher computational resources that were utilised to render the building when the character was on the pavement/sidewalk may be reallocated to other rendering processes (increasing the level of detail of other meshes, for example).

However, as mentioned previously, such rendering processes may cause the user to experience a break in immersion or even feel discomfort or nausea when utilised, despite being relied upon for providing immersive user experiences, despite a limited render budget, in the first place. This may be due to the computational expense associated with executing such rendering processes, or simply a discrete change in what is being displayed. For example, such rendering processes may (at least temporarily) cause a reduction in frame rate, screen tearing, sudden changes in virtual element resolution/texture caused by a change in the level of detail associated with an object, may cause virtual elements to "pop" in/out of the environment, or otherwise negatively impact the visual aspects of the interactive content.

It is also considered that other processes performed by the system (such as frame synchronisation or garbage collection) may negatively impact the generation of images for display. These negative impacts are not necessarily a feature of the processes, but instead may result from the consumption of additional processing resources by these processes. For instance, a computationally expensive process may be expected to lead to a reduction in the frame rate of the content being rendered due to the system being unable to perform each of the rendering and other processes simultaneously in a timely manner.

The aforementioned problem may be alleviated or mitigated by implementing means to determine a screen location (of a display screen that is displaying the interactive content) towards which a user's gaze is directed, and based on the determined screen location, execute one or more rendering processes. These may be rendering processes that are relied upon for user immersion purposes, yet may (at least temporarily) cause user discomfort when executed, for instance.

In other words, rendering processes which can negatively impact one or more visual aspects of the interactive content may be executed with a reduced impact upon the user experience. For instance, a user may have been found to be gazing at a corner of the screen (where the user's in-game character statistics are usually displayed, for example), rather than gazing at a more central region of the screen), in which case they would be less likely to notice a change in the appearance of an element in the central region of the screen. A user that is focused on character statistics (which are usually relatively static) may also be less likely to notice any impact on the overall display of content, such as a change in the frame rate.

Graphics Rendering Apparatus

Accordingly, turning now to figure 2, in embodiments of the present description, a graphics rendering apparatus comprises rendering unit 200 configured to render image content for display on a display screen; input unit 202 configured to receive one or more images of one or both eyes of a user; and gaze tracking unit 204 configured to determine a region of the display screen towards which a gaze of a user is directed; wherein rendering unit 200 is configured to execute, in dependence upon the determined region of the display screen, one or more computational processes that are expected to cause a visual discontinuity to occur within at least a part of the image content, wherein rendering unit 200 is configured to execute the one or more computational processes with respect to at least one or more parts of the image content that correspond to one or more regions of the display screen that are different from the determined region of the display.

The rendering unit 200 may comprise any combination of processing units (such as CPUs and/or GPUs) which are operable to perform processing in respect of the rendering of content. This may include both image rendering itself and other background processes alongside the image rendering, such as frame rate synchronisation and garbage collection. Any other processes may also be considered to be performed by this rendering unit 200 as appropriate due to the general nature of the processing units - such that background processes which are not related to the rendering process may also be considered when assessing processes for a likely negative impact upon the rendering process if they respective processes use shared hardware elements. While the below makes reference to 'rendering processes' having negative impacts, it should be considered that the described processes are equally applicable to any processes having (or expected to have) a negative impact upon the rendering process.

The visual discontinuities are considered to be negative impacts upon the rendering process which case a discrepancy between image frames or the like so as to negatively impact the user's experience. For instance, a change in the frame rate may be considered to be a visual discontinuity as this can cause the motion of objects between successive frames to appear less smooth; similarly visual discontinuities may include frame-to-frame changes in the resolution associated with an object texture or mesh within an image.

As a non-limiting example of the graphics rendering apparatus in operation, consider a user playing a video game. Rendering unit 200 may render image frames of the video game for display on a display that is visible to the user. In order to increase the immersiveness of the video game, certain rendering processes (shading, texturing, lighting, colouring, or the like) may be carried out on the virtual elements of the video game. However, given that certain rendering processes may (at least temporarily) negatively impact the visual aspects of the video game (and therefore the immersiveness thereof), these rendering processes should ideally be executed at a moment in time when the user is found to be paying relatively less attention to the gameplay and/or is less likely to notice such negatively impacted visuals in order to reduce the chances/extent to which the user's immersion within the video game is broken (or reduce the chances/extent of user discomfort).

Thus, gaze tracking unit 204 may determine, based on the images received by receiving unit 202, which region (location) of the display screen the user's gaze is currently directed towards, and rendering unit 200 may determine whether/to what extent such rendering processes should be executed based on the determination. For example, if gaze tracking unit 204 determines that the user's gaze is directed towards the centre of the screen, then rendering unit 200 may not execute rendering processes that would be expected to (at least temporarily) negatively impact the visual aspects of the video game. This is because the central region of the display screen typically comprises a significant portion of the video game. As such, if the user is gazing within this region, then any negatively impacted visual aspects of the video game are more likely to be noticed by the user, and thus more likely to result in breaks in immersion or user discomfort. However, if gaze tracking unit 204 determines that the user's gaze is directed towards a corner of the screen, then rendering unit 200 may execute rendering processes that would (at least temporarily) negatively impact the visual aspects of the video game, as the corner of the screen comprises a relatively smaller/less significant portion of the video game, leading to a reduction in the chance/extent of immersion breaks and/or user discomfort.

The gaze tracking unit 204 may be further configured to determine whether the user currently has their eyes closed, for instance during a blink action; this may be inferred from a failure to detect a pupil of the corresponding eye, for instance. This may be determined on a per-eye basis (for instance, detecting a wink), or for both eyes together. In the former case, this may be advantageous for HMD-based rendering or the like in which the user is shown left-eye and right-eye images which differ - and as such the processing applied to each may be different, such as including different objects due to differing fields of view for the respective eyes. In either case, if a user is not able to view one or more displays then it is considered that they would not notice any changes to the display on those displays; it may therefore be considered advantageous to execute rendering processes during a blink or wink as appropriate.

As will be appreciated by persons skilled in the art, regions of the screen per se need not be considered; the virtual elements towards which the user is gazing may alternatively or additionally be taken into account. For example, if gaze tracking unit 204 determines that the user gazing at a given screen location, then rendering unit 200 may not execute rendering processes that would be expected to (at least temporarily) negatively impact the visual aspects of any virtual elements found to lie within the determined region, but may do so for one or more other virtual elements that fall outside of the determined region.

In any case, gaze tracking unit 204 is used to determine whether/to what extent the user is paying attention to the video game or an element of that video game, and rendering unit 200 executes rendering processes that may (temporarily) impact the visuals of the video game in such a manner so as to limit the extent to which the user notices such impacted visuals (applying such rendering processes to certain virtual elements towards which the user is not gazing, and/or applying them when the user's gaze is directed away from the central region of the screen, for example).

In doing so, the embodiments of the present description seek to alleviate or mitigate the breaking of user immersion and/or the occurrence of user discomfort.

Image Content

In embodiments of the present description, rendering unit 200 is configured to render image content for display on a display screen (or a pair of screens, for instance in the case of some HMD-based arrangements). In embodiments of the present description, rendering unit 200 may be one or more CPUs (such as CPU 20, for example) and/or one or more GPUs (such as GPU 30, for example).

The image content may be a still image, or may be a sequence of image frames that form a moving image when displayed successively. Moreover, the image content may be associated with a video game, a virtual/augmented/mixed reality application, or any other interactive application/software whose image content requires rendering prior to display.

The display screen may be a screen of a TV, a mobile phone, a computer (such as a desktop, laptop, or tablet), a thin client, or the like. Moreover, the display screen may be in communication with the graphics rendering apparatus described herein via wired or wireless communication methods such as USB, Ethernet ®, Wi-Fi ®, Bluetooth ®, the Internet, LAN, WLAN, or the like.

Gaze Tracking

In embodiments of the present description, it is desirable to determine which (if any) region of the display screen the user's gaze is directed towards in order that rendering (or other computational) processes which are expected to negatively impact one or more visual aspects of the interactive content may be executed at time during which the user the user would be unaware (or at least less aware) of such negative impacts. It should be noted that such processes (that is, those which are expected to have a negative visual impact) are hereinafter referred to as "visually disruptive rendering/computational processes". Of course, it is not required that the processes are visually disruptive - it is sufficient that a visual disruption would be expected, or at least likely, to result from the processing.

Therefore, in embodiments of the present description, input unit 202 is configured to receive one or more images of one or both eyes of a user, and gaze tracking unit 204 is configured to determine, based on one or more of the received images, a region of the display screen towards which a gaze of a user is directed. Alternatively put, gaze tracking unit 204 is configured to determine which region of the display screen the gaze of the user is directed towards based on the images received at input unit 202.

In embodiments of the present description, input unit 202 may be one or more data ports, such as data port 60, USB ports, Ethernet ® ports, Wi-Fi ® ports, Bluetooth ® ports, or the like. The images of the user's eye(s) received at input unit 202 may be captured by one or more cameras such as conventional shutter cameras, event cameras, infrared cameras, or the like. The images may be received via wired or wireless communication methods such as USB, Ethernet ®, Wi-Fi ®, Bluetooth ®, the Internet, LAN, WLAN, or the like.

In embodiments of the present description, gaze tracking unit 204 may be one or more CPUs (such as CPU 20, for example) and/or one or more GPUs (such as GPU 30, for example). In some embodiments, such processing units may be provided with the gaze tracking cameras in an integrated fashion. Gaze tracking unit 204 may be configured to determine the user's gaze direction based on the received images by using any commonly known gaze tracking techniques, a non-limiting example of which being feature-based detection methods (that is, detecting the locations of pupils, irises, corneas and/or corneal reflections within the images of the user's eye(s)).

Feature-based detection methods may involve the use of facial feature detection algorithms. As such, gaze tracking unit 204 may be configured to detect (features of) the eye(s) of the user in one or more of the received images by using one or more facial feature detection algorithms (or components thereof) as required. The term "facial feature detection algorithm" refers to any suitable computer-implemented method, software, algorithm, or the like, which causes a computer (such as the graphics rendering apparatus described herein) to detect facial features (and optionally, inter-feature relationships) from images of a face. Such facial feature detection algorithms are well-known in the art. Examples of such algorithms include eigenfaces, eigenfeatures, fisherfaces, or the like. Moreover, machine learning and methods, neural networks, artificial intelligence, or the like may be used to detect facial features (and inter-feature relationships).

Optionally, embodiments of the present description may comprise blink prediction unit 206 configured to predict, based on one or more of the images, when the user will blink. Blink prediction unit 206 may be one or more CPUs (such as CPU 20, for example) and/or one or more GPUs (such as GPU 30, for example).

As will be appreciated by persons skilled in the art, predicting user blinks may be advantageous in that rendering unit 200 may execute one or more visually disruptive rendering processes during a time in which the user is predicted to be blinking, and thus may reduce the extent to which the user notices/is aware of any negative visual impacts associated with executing such rendering processes due to their eye(s) being temporarily occluded. The use of blink prediction may be advantageous (relative to blink detection) in that a greater amount of the blink duration can be utilised as the latency associated with the detection process would be bypassed.

Blink prediction unit 206 may be configured to predict when the user will blink in dependence upon an average elapsed time between occurrences of the user blinking, for example. As a non-limiting example, blink prediction unit 206 may detect occurrences of the user blinking within historical images of the user's eye(s). The historical images may have come from a current session of playing a video game (or indeed interacting with some form of interactive content), and/or may have come from one or more previous sessions in which the user interacted with one or more video games (or forms of interactive content).

Similarly with determining the user's gaze direction, detecting the occurrence of blinks may be achieved through the use of facial feature detection algorithms. As such, blink prediction unit 206 may be configured to detect (features of) the eye(s) of the user in one or more of the received images by using one or more facial feature detection algorithms (or components thereof) as required.

As an example of using such facial feature detection algorithms, blink prediction unit 206 may detect the pupil(s) of the user in the received images, and if blink prediction unit 206 cannot detect the user's pupil(s) in a given image, then that given image may be determined to be an image in which the user is blinking (that is, one where the user's eyelid is at least covering the pupil). Blink prediction unit 206 may subsequently determine the average time between blinks by considering the timestamps of those images in which the user is found to be blinking. For example, there may be, say, N images in which the user is blinking, each having a respective timestamp that indicates the time at which the image was captured. As will be appreciated by persons skilled in the art, the time may be real world time, a time associated with an internal clock of the camera, or a time elapsed since the powering on of the camera, or the like. The average time between blinks may therefore be calculated using equation 1.

$$T = \frac{t_N - t_1}{N} \qquad \text{Equation 1}$$

Where $T$ is the average elapsed time between blinks, $N$ is the total number of images in which the user is blinking, $t_N$ is the timestamp of the $N^{th}$ image in which the user is blinking, and $t_1$ is the timestamp of first image in which the user is blinking. During a session of gameplay (or content interaction), images of the user's eye(s) may be continually received by input unit 202. As such, this average elapsed time may be continually updated. For example, equation 2 may be used to update the average elapsed time between blinking.

$$T' = \frac{t_{N'} - t_N + NT}{N'} \qquad \text{Equation 2}$$

Where $T'$ is the updated average elapsed time between blinks, $N'$ is the updated total number of images in which the user is blinking, and $t_{N'}$ is the timestamp of the $N'^{th}$ image in which the user is blinking.

Subsequently, the (updated) average elapsed time between blinks may be used to predict when the user will blink next (that is, subsequent to the most recent time that the user blinked). Subsequently, rendering unit 200 may prepare to execute one or more visually disruptive rendering processes at the predicted time.

Alternatively or in addition, blink prediction unit 206 may be configured to predict when the user will blink in dependence upon one or more contractions of one or more facial muscles of the user prior to blinking. Similarly with detecting an average elapsed time between blinks, one or more facial feature detection algorithms may be implemented in order to detect facial muscles and contractions thereof. These detected facial muscle contractions may therefore serve as a pre-blink cue which may be used to predict when the user will blink next. This is especially apparent in a case where the same (or similar) muscle contractions occur prior to blinking. Blink prediction unit may predict a time (subsequent to the pre-blink cue) at which the user blinks by calculating an average time elapsed between pre-blink cue and the blink. Such an average may be calculated using equation 3.

$$P = \frac{\sum_{i=1}^{M}(t_i - p_i)}{M} \qquad \text{Equation 3}$$

Where $P$ is the average elapsed between pre-blink cue and blink, $t_i$ is the timestamp of the $i^{th}$ image in which the user is blinking, $p_i$ is the timestamp of the $i^{th}$ image in which the pre-blink cue occurs, and M is the number of instances in which a pre-blink cue is followed by a blink. As will be appreciated by persons skilled in the art, this average may be updated in a manner analogous to that described with respect to the average time between blinks.

Subsequently, the (updated) average elapsed time between pre-blink cue and blink may be used to predict when the user will blink next (that is, subsequent to the most recent time that the user performed a pre-blink cue). Subsequently, rendering unit 200 may prepare to execute one or more visually disruptive rendering processes at the predicted time.

Optionally, the period of time during which the user blinks may be considered. For example, certain blinks may last longer than others. In particular, blink lasting longer than, say, a second are typically considered to be microsleeps. Such longer blinks and/or microsleeps may provide more time for rendering unit 200 to prepare and execute the one or more visually disruptive rendering processes, and/or may even result in the user being less likely to notice the negative impacts thereof due to their eye(s) being occluded for a longer period of time than a typical blink (which usually last for 100-150 milliseconds).

As will be appreciated by persons skilled in the art, more than one image of the user's eye(s) may be captured during a blink (especially if the shutter speed is less than the typical duration of a blink). Thus, a sequence of images in which the pupil(s) of the user's eye(s) are occluded. The duration of such a sequence of images (and thus the duration of the blink) may be determined by calculating the difference between the first and last images of such a sequence of images. A threshold blink duration may be imposed, and if a given blink's duration is found to meet or exceed such a threshold, then the timestamp of the onset of the given blink (that is, the timestamp of the first image of a given sequence of images in which the pupil(s) of the user's eye(s) are occluded) may be used to calculate the average time between blinks of an above-threshold duration. Such an average may be determined (and even updated) in a manner analogous to that described with respect to the average time between blinks.

Subsequently, the (updated) average elapsed time between blinks of an above-threshold duration (a long blink) may be used to predict when the user will perform a long blink next (that is, subsequent to the most recent time that the user performed a long blink). Subsequently, rendering unit 200 may prepare to execute one or more visually disruptive rendering processes at the predicted time.

The blink prediction unit 206 may further (or instead) be configured to predict the occurrence of blinks based upon information about the content being rendered. For example, one or more stimuli (triggers) associated with the image content may be considered. For instance, visual triggers such as changes in brightness or emotional triggers such as surprising or shocking events may be expected to trigger a blink by a user - such a prediction may be refined in dependence upon a user profile or other user data, such as a determination of a user's tolerance for brightness changes before a blink is performed. Hence, more generally, blink prediction unit 206 may be configured to predict a user blink in dependence upon one or more stimuli associated with the image content.

In any case, rendering unit 204 may execute one or more visually disruptive rendering processes at a time during which the user is considered to be less perceptive of the negative impacts associated with executing such rendering processes (that is, a time during which the user is looking towards an edge/corner of the screen, or optionally is blinking).

Rendering Processes

In embodiments of the present description, rendering unit 200 is configured to execute, in dependence upon the determined region of the display screen, one or more computational processes that are expected to cause a visual discontinuity to occur within at least a part of the image content, wherein rendering unit 200 is configured to execute the one or more computational processes with respect to one or more parts of the image content that correspond to one or more regions of the display screen that are different from the determined region of the display.

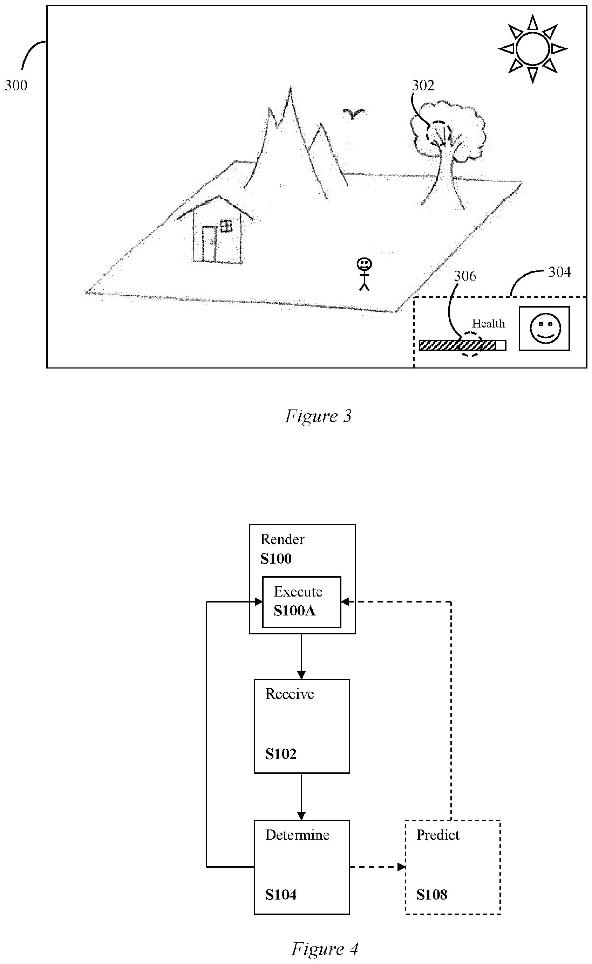

As a non-limiting example of rendering unit 200 executing such visually disruptive rendering/computational processes in the aforementioned manner, consider a user playing a video game. Figure 3 depicts the image content of the video game in question as it would be displayed on a display screen 300. As will be appreciated by persons skilled in the art, the image content depicted in figure 3 is entirely non-limiting; all types/genres of video games (and indeed all types/genres of interactive applications/software) may be considered.

During gameplay, the user may look at a certain virtual element within the image content. For example, the user may look at the tree depicted in figure 3. While the user is looking at the tree, images of the user's eye(s) may be received at input unit 202, and gaze tracking unit may determine that the user's gaze is directed toward region 302. In response to this determination by gaze tracking unit 204, rendering unit 200 may execute one or more visually disruptive rendering processes with respect to those parts of the image content that do not correspond to screen region 302. That is to say, the visually disruptive rendering (or other computational) processes are executed with respect to image content lying in regions of the display screen that are different from screen region 302.

For example, while the user is focused on the region 302 processing may be performed to cause the rendering of additional elements that are outside of this region. For instance, a draw call may be generated for the mountain which can cause this to be rendered in the image - in this way, the mountain can be added to the image with a reduced likelihood of the user noticing the mountain 'popping' into the display area (that is, suddenly appearing). This can therefore maintain the user's sense of immersion with respect to the content.

Similarly, modifications to the tree's display may be reserved for when the user blinks. For instance, if the user is focused upon the region 302 while moving closer to the tree (for instance, by moving an avatar and a corresponding viewpoint within a virtual environment) it may be desirable to increase the display quality of the tree. However, such an increase may cause a loss of immersion in the case in which a texture and/or mesh is switched for a higher-quality alternative as the user may notice this change. By performing the switch of the mesh and/or texture during a blink, the likelihood of the user noticing this change is reduced.

Another example of such a process is that of performing a frame rate synchronisation or garbage collection process (examples of visually disruptive computational processes) when the user is looking at a stationary object (such as the mountain) or heads-up display (such as the user data area 304). By waiting until a user is viewing a static area (or indeed, not viewing any area in the case of a blink), the effects of a frame rate synchronisation or other process (in which a frame rate may become temporarily less stable) may be reduced. This is because the frame rate would be more noticeable when viewing dynamic objects, as the motion may appear to be more stuttered, than when viewing a static object or UI element.

One way to ascertain whether a given rendering process is a visually disruptive one (or at least potentially visually disruptive) may be to determine how computationally expensive the process is. To do this, each rendering process may be associated with data/metadata indicating the amount of computational resources required in order to execute it, as a non-limiting example. For example, a given rendering process may be associated with data/metadata that provides an indication that the given rendering process requires a certain amount of resources associated with RAM, CPU, GPU, or the like. Such data may also indicate a latency associated with each process, for example, as this is an attribute that may lead to a change in the frame rate. Rendering unit 200 may receive such strings of data/metadata, and based thereon determine which of the rendering processes are those whose computational expenditure meets or exceeds a threshold computational expenditure (a threshold amount of RAM, CPU, GPU, or the like, for example). As will be appreciated by persons skilled in the art, the threshold computational expenditure may be immutable or dynamically adjustable, and may have been predefined or user-defined. In some implementations, a threshold may be defined for the computational expenditure in which any process having an expenditure exceeding this threshold is regarded as being likely to cause visual disruption.

The threshold for what constitutes an 'expensive' operation may be determined freely; in some cases, this may be based upon a measure relative to other operations (such that the most expensive operations are designated as being expensive). Alternatively, or in addition, a consideration may be made of the available processing resources - a system with a low resource utilisation may not consider many (or indeed any) operations to be expensive, while a system with high resource utilisation may consider a much greater number of operations to be computationally expensive due to the reduced capacity for performing additional operations.

As will be appreciated by persons skilled in the art, the computationally expensive rendering processes may impact one or more visual aspect(s) of the image content (that is, they may be regarded as a visually disruptive rendering process).

Alternatively or in addition, ascertaining whether a computational process is a visually disruptive one may simply be a matter of determining what steps the process includes. For example, a changing a level of detail of a mesh need not be computationally expensive in order to cause a visual discontinuity; lowering the mesh's level of detail would likely result in a reduction in computational expenditure associated with rendering the mesh, for example. Rather, in this case, the mere substitution of a higher detail mesh for a lower detail mesh (or vice versa) is sufficient to consider such a process that is expected to cause a visual discontinuity, and thus be considered a visually disruptive rendering process.

Hence, as will be appreciated by persons skilled in the art, a computational process that is expected to cause a visual discontinuity to occur within at least a part of the image content should be construed as a computational process that, because of the computational expenditure associated therewith and/or because the nature of the process steps thereof, have a potential to cause a visual discontinuity to occur within the image content (a frame rate drop, a sudden change in at least a part of image content depicted within consecutive frames, a sudden change in the resolution of at least part of the image content, or the like), regardless of whether the execution of such a process at a given point in time and/or on a given part of the image content actually does cause such a visual discontinuity. That is to say, in general, a given computational process may be considered to be a visually disruptive one if it is able or likely to cause a visual discontinuity when executed, rather than requiring that it will cause one.

One or more of the computational processes may cause a resolution of at least a part of the image content to change when executed by rendering unit 200. That is to say, one or more of the visually disruptive rendering process may modify the visual definition of part of the image content. As such, it would be desirable that rendering unit 200 execute such rendering processes in those parts of the image content that do not correspond to the currently gazed at region of the display screen (screen region 302, for example) so that the user is less likely to notice such changes (and thus less likely to break their immersion or cause them to feel discomfort).

As will be appreciated by persons skilled in the art, the process of adapting a mesh's level of detail, as discussed previously, may be considered as such a visually disruptive process that causes a resolution change in (part of) the image content. Hence, more generally, one or more of the rendering computational processes comprises adapting a level of detail of at least a part of a mesh of a virtual element comprised within the image content.

It should be noted that the preceding example is not exhaustive; persons skilled in the art will appreciate that rendering processes that cause a change in resolution of at least a part of the image content other than changes to a mesh's level of detail are considered within the scope of the present description.

Alternatively, or in addition, the one or more computational processes (that is, those which cause a visual discontinuity, or at least are likely to do so) may include at least one of:

- adding a mesh of at least a part of a virtual element to the image content;
- removing a mesh of at least a part of a virtual element from the image content;
- modifying a texture and/or mesh level of detail for at least a part of a virtual element in the image content; and
- modifying a location of a virtual element within the image content.

It should be noted that the preceding examples are not exhaustive; persons skilled in the art will appreciate that rendering processes that cause a visual discontinuity to occur within at least a part of the image content other than those mentioned previously are considered within the scope of the present description. In particular, persons skilled in the art will appreciate that the aforementioned rendering processes that cause a change in resolution may be considered to also be rendering processes that cause a visual discontinuity to arise. For example, changing a level of detail of a virtual element's mesh can cause a sudden change in the visual definition of the virtual element, which may be thought of as a visual discontinuity.

Alternatively or in addition, one or more of the computational processes may cause a frame rate of the image content to change when executed by rendering unit 200. As will be appreciated by persons skilled in the art, frame rate changes typically effect the entirety of the image content. As such, the effects of such visually disruptive rendering processes, even if they were to be executed with respect to parts of the image content not being gazed at by the user, would likely still be noticeable to the user regardless of which region of the display screen the user is looking towards.

Therefore, it may be desirable to execute such processes (that affect frame rate) when the user is looking away from the display screen altogether. As such, gaze tracking unit 204 may be configured to determine whether the gaze of the user is directed toward the display screen, and if not, rendering unit 200 may be configured to execute one or more rendering processes which may cause a frame rate of the image content to change so that the user is less likely to notice such changes (and thus less likely to break their immersion cause them to feel discomfort).

Alternatively or in addition to determining that the user has looked away from the display screen, rendering unit 200 may be configured to execute the one or more of the computational processes in dependence upon whether at least a part of the determined region of the display screen falls within a predefined region of the display screen. The predefined region of the display screen should ideally be such that when the user's gaze is directed towards it, the user would be relatively less likely to notice changes in the frame rate of the image content.

Figure 3 provides a non-limiting example of such a predefined region. As seen in figure 3, predefined region 304 is situated at the bottom right corner of the display screen, and roughly coincides with graphical user interface (GUI) elements indicating the in-game character's statistics, such statistics being the character's health level and current mood in this example.

During gameplay, the user may wish to find out about the current state of their character. As such, the user may look at, the GUI element that indicates the health level of their character. While the user is looking at the GUI element, images of the user's eye(s) may be received at input unit 202, and gaze tracking unit may determine that the user's gaze is directed toward region 306 (which falls with predefined region 304). In response to this determination by gaze tracking unit 204, rendering unit 200 may execute one or more processes that cause a change in frame rate when rendering unit 200 has determined that at least a part of region 306 falls within predefined region 304 (which is the case in this example).

Executing these rendering processes is such a manner results in the user being less likely to notice the effects thereof (frame rate change), and thus less likely break their immersion/feel discomfort. This is because their gaze is not directed toward the centre of the screen (where more dynamic image content is usually displayed), but is rather towards the periphery thereof (where relatively static image content is often displayed). Moreover, in this example, the user is even less likely to notice any frame drop, as they will be occupied with finding out the health level of their character. Furthermore, given that GUI elements are typically overlaid onto the image content (and as such, are typically not affected by the rendering processes used to generate the image content), the user should not notice any change to the appearance of the health level or mood GUI elements themselves (or any other GUI elements for that matter).

Hence, more generally, in order to reduce the likelihood of the user noticing frame rate drops, the predefined region of the display screen may be made to coincide with one or more graphical user elements overlaid onto the displayed image content, and/or may be situated towards an edge and/or corner of the display screen. As will be appreciated by persons skilled in the art, more than one such predefined regions may be implemented.

In any case, optionally the one or more of the rendering processes (that cause a frame rate change) may comprise at least one of:

- generating draw calls ;
- loading meshes and/or textures;
- a garbage collection process; and
- a frame rate synchronisation.

It should be noted that the preceding examples are not exhaustive; persons skilled in the art will appreciate that rendering processes that cause a change in frame rate other than those mentioned previously are considered within the scope of the present description.

Moreover, in light of the preceding discussion regarding rendering processes that causes a frame rate change, persons skilled in the art will appreciate therefore that while rendering unit 200 is configured to execute the one or more (visually disruptive) rendering processes with respect to one or more parts of the image content that correspond to one or more regions of the display screen that are different from the determined region of the display, rendering unit 200 does not necessarily do so exclusively. That is to say, rendering unit 200 does not necessarily execute visually disruptive rendering processes exclusively with respect to those parts of the image content towards which the user is not gazing; as mentioned previously, frame rate changes typically affect the entirety of the image content (that is, including the part of the image content towards which the user is gazing).

Where embodiments of the present description comprise blink prediction unit 206, rendering unit 200 may be configured to execute the one or more rendering processes within a time period during which the user is predicted to be blinking. As will be appreciated by persons skilled in the art, by doing so, the user is less likely to notice the effects of the execution of the visually disruptive process due to their eye(s) being temporarily occluded.

In any case, by executing visually disruptive processes on parts of the image content towards which the user is not gazing and/or while the user gazes at a predefined screen region (or optionally, executing such process while the user is blinking), the user is less likely to notice any associated negative impacts of the execution of said rendering processes, and is thus less likely to break their immersion and/or experience discomfort/nausea.

Summary Embodiment(s)

Hence, in a summary embodiment of the present description a graphics rendering apparatus comprises: rendering unit 200 configured to render image content for display on a display screen; input unit 202 configured to receive one or more images of one or both eyes of a user; and gaze tracking unit 204 configured to determine, based on one or more of the received images, a region of the display screen towards which a gaze of the user is directed; wherein rendering unit 200 is configured to execute, in dependence upon the determined region of the display screen, one or more computational processes that are expected to cause a visual discontinuity to occur within at least a part of the image content, wherein rendering unit 200 is configured to execute the one or more computational processes with respect to one or more parts of the image content that correspond to one or more regions of the display screen that are different from the determined region of the display, as described elsewhere herein.

It will be apparent to persons skilled in the art that variations in the aforementioned apparatus as described and claimed herein are considered within the scope of the present invention, including but not limited to that:

- In an instance of the summary embodiment, one or more of the computational processes cause a resolution of at least a part of the image content to change when executed by rendering unit 200, as described elsewhere herein;
- In an instance of the summary embodiment, one or more of the computational processes comprises adapting a level of detail of at least a part of a mesh of a virtual element comprised within the image content, as described elsewhere herein;
- In an instance of the summary embodiment, the one or more of the rendering processes comprise at least one of:

    i. adding at least a part of a mesh of a virtual element to the image content;
    ii. removing at least a part of a mesh of a virtual element from the image content;
    iii. modifying a mesh and/or texture associated with at least a part of a virtual element within the image content; and
    iv. modifying a location of a virtual element within the image content,

    as described elsewhere herein;

- In an instance of the summary embodiment, one or more of the computational processes cause a frame rate of the image content to change when executed by rendering unit 200, as described elsewhere herein;

  - In this instance, optionally rendering unit 200 is configured to execute the one or more of the computational processes in dependence upon whether at least a part of the determined region of the display screen falls within a predefined region of the display screen, as described elsewhere herein;
  - In this instance, optionally one or more of the rendering processes comprise at least one of:

    i. generating a draw call;
    ii. loading a mesh and/or texture;
    iii. a garbage collection process; and
    iv. a frame rate synchronisation,

    as described elsewhere herein;

- In an instance of the summary embodiment, the graphics rendering apparatus comprises blink prediction unit 206 configured to predict, based on one or more of the received images, when the user will blink; wherein rendering unit 200 is configured to execute the one or more computational processes within a time period during which the user is predicted to be blinking, as described elsewhere herein;

  - In this instance, optionally blink prediction unit 206 is configured to predict when the user will blink in dependence upon an average elapsed time between occurrences of the user blinking, as described elsewhere herein;
  - In this instance, optionally blink prediction unit 206 is configured to predict when the user will blink in dependence upon one or more contractions of one or more facial muscles of the user prior to blinking, as described elsewhere herein; and
  - In this instance, optionally blink prediction unit 206 is configured to predict when the user will blink in dependence upon one or more stimuli associated with the image content, as described elsewhere herein.

Graphics Rendering Method

Turning now to Figure 4, a graphics rendering method comprises the following steps:

Step S100: rendering image content for display on a display screen, as described elsewhere herein.

Step S102: receiving one or more images of one or both eyes of a user, as described elsewhere herein.

Step S 104: determining a region of the display screen towards which a gaze of a user is directed, as described elsewhere herein.

Step S100A: rendering step S100 comprises executing, in dependence upon the determined region of the display screen, one or more computational processes that are expected to cause a visual discontinuity to occur within at least a part of the image content, the one or more computational processes being executed with respect to one or more parts of the image content that correspond to one or more regions of the display screen that are different from the determined region of the display, as described elsewhere herein.

Moreover, the graphics rendering method may be modified in the following way:

Step S108: predicting, for example based on one or more of the received images, when the user will blink, as described elsewhere herein.

Step S100A: executing the one or more rendering processes within a time period during which the user is predicted to be blinking, as described elsewhere herein.

It will be apparent to a person skilled in the art that variations in the above method corresponding to operation of the various embodiments of the apparatus as described and claimed herein are considered within the scope of the present invention.

It will be appreciated that the above methods may be carried out on conventional hardware (such as entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A graphics rendering apparatus, comprising:

   a rendering unit configured to render image content for display on a display screen;
   an input unit configured to receive one or more images of one or both eyes of a user; and
   a gaze tracking unit configured to determine, based on one or more of the received images, a region of the display screen towards which a gaze of the user is directed,
   wherein the rendering unit is configured to execute, in dependence upon the determined region of the display screen, one or more computational processes that are expected to cause a visual discontinuity to occur within at least a part of the image content, wherein the rendering unit is configured to execute the one or more computational processes with respect to one or more parts of the image content that correspond to one or more regions of the display screen that are different from the determined region of the display.

2. A graphics rendering apparatus according to claim 1, wherein one or more of the computational processes cause a resolution of at least a part of the image content to change when executed by the rendering unit.

3. A graphics rendering apparatus according to any preceding claim, wherein one or more of the computational processes comprises adapting a level of detail of at least a part of a mesh of a virtual element comprised within the image content.

4. A graphics rendering apparatus according to any preceding claim, wherein the one or more of the computational processes comprise at least one of:

   i. adding a mesh of at least a part of a virtual element to the image content;
   ii. removing a mesh of at least a part of a virtual element from the image content;
   iii. modifying a mesh and/or texture associated with at least a part of a virtual element within the image content; and
   iv. modifying a location of a virtual element within the image content.

5. A graphics rendering apparatus according to any preceding claim, wherein one or more of the computational processes cause a frame rate of the image content to change when executed by the rendering unit.

6. A graphics rendering apparatus according to claim 5, wherein the rendering unit is configured to execute the one or more of the computational processes in dependence upon whether at least a part of the determined region of the display screen falls within a predefined region of the display screen.

7. A graphics rendering apparatus according to claim 5 or claim 6, wherein the one or more of the computational processes comprise at least one of:

   i. generating a draw call;
   ii. loading a mesh and/or texture;
   iii. a garbage collection process; and

iv. a frame rate synchronisation.

8. A graphics rendering apparatus according to any preceding claim, comprising:

a blink prediction unit configured to predict, based on one or more of the received images, when the user will blink; wherein the rendering unit is configured to execute the one or more computational processes within a time period during which the user is predicted to be blinking.

9. A graphics rendering apparatus according to claim 8, wherein the blink prediction unit is configured to predict when the user will blink in dependence upon an average elapsed time between occurrences of the user blinking.

10. A graphics rendering apparatus according to claim 8 or claim 9, wherein the blink prediction unit is configured to predict when the user will blink in dependence upon one or more contractions of one or more facial muscles of the user prior to blinking.

11. A graphics rendering apparatus according to any of claims 8-10, wherein the blink prediction unit is configured to predict a user blink in dependence upon one or more stimuli associated with the image content.

12. A graphics rendering method, comprising the steps of:

rendering image content for display on a display screen;
receiving one or more images of one or both eyes of a user; and
determining a region of the display screen towards which a gaze of a user is directed,
wherein the rendering step comprises executing, in dependence upon the determined region of the display screen, one or more computational processes that are expected to cause a visual discontinuity to occur within at least a part of the image content, the one or more computational processes being executed with respect to one or more parts of the image content that correspond to one or more regions of the display screen that are different from the determined region of the display.

13. A computer program comprising computer executable instructions adapted to cause a computer system to perform the method of claim 12.

14. A non-transitory, computer-readable storage medium having stored thereon the computer program of claim 13.

*Figure 1*

*Figure 2*

*Figure 3*

*Figure 4*

Europäisches
Patentamt

European
Patent Office

Office européen
des brevets

# EUROPEAN SEARCH REPORT

**Application Number**

EP 24 15 2928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/299953 A1 (SELKER EDWARD JOSEPH [US] ET AL) 18 October 2018 (2018-10-18) * paragraph [0032]; figure 2B * * paragraph [0046] - paragraph [0047] * | 1-14 | INV. G06F3/01 G02B27/00 G09G5/391 G02B27/01 G06T15/00 |
| X | YASHAS JOSHI ET AL: "SaccadeNet: Towards Real-time Saccade Prediction for Virtual Reality Infinite Walking", ARXIV.ORG, CORNELL UNIVERSITY LIBRARY, 201 OLIN LIBRARY CORNELL UNIVERSITY ITHACA, NY 14853, 31 May 2022 (2022-05-31), XP091235651, Retrieved from the Internet: URL:http://arxiv.org/abs/2205.15846> * sections 1, 2.3 * | 1-14 | |
| X | MARWECKI SEBASTIAN: "Mise-Unseen Using Eye Tracking to Hide Virtual Reality Scene Changes in Plain Sight", USER INTERFACE SOFTWARE AND TECHNOLOGY, ACM, 2 PENN PLAZA, SUITE 701, NEW YORK, NY, 10121-0701 USA, 17 October 2019 (2019-10-17), pages 777-789, XP058479541, DOI: 10.1145/3332165.3347919 ISBN: 978-1-4503-6816-2 * abstract; figures 1, 7, 8 * * page 777 - page 779 * | 1-14 | |
| A | US 2021/358216 A1 (LAFAYETTE PIERRE-ANTOINE BENOIT [CA] ET AL) 18 November 2021 (2021-11-18) * paragraphs [0004], [0031] * * paragraph [0037] - paragraph [0038] * | 1-5, 12-14 | |

**TECHNICAL FIELDS SEARCHED (IPC)**

G06F
G06T
G09G
G02B
A61B
A63F
A63B

-/--

The present search report has been drawn up for all claims

| Place of search | Date of completion of the search | Examiner |
|---|---|---|
| Munich | 31 May 2024 | Tonet, Oliver |

EPO FORM 1503 03.82 (P04C01)

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/285736 A1 (YOUNG ANDREW [US] ET AL) 5 October 2017 (2017-10-05) * paragraphs [0040], [0050], [0055], [0053], [0068] * ----- | 8,9 | |
| A | EP 3 140 719 B1 (GOOGLE LLC [US]) 7 July 2021 (2021-07-07) * paragraphs [0245], [0466] * ----- | 8-11 | |

TECHNICAL FIELDS SEARCHED (IPC)

The present search report has been drawn up for all claims

| Place of search | Date of completion of the search | Examiner |
|---|---|---|
| Munich | 31 May 2024 | Tonet, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2928

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | | Publication date |
|---|---|---|---|---|
| US 2018299953 A1 | 18-10-2018 | AU | 2018252665 A1 | 17-10-2019 |
| | | CA | 3058669 A1 | 18-10-2018 |
| | | CN | 110520824 A | 29-11-2019 |
| | | CN | 117389420 A | 12-01-2024 |
| | | EP | 3610359 A1 | 19-02-2020 |
| | | IL | 269861 A | 28-11-2019 |
| | | JP | 7211966 B2 | 24-01-2023 |
| | | JP | 7291841 B2 | 15-06-2023 |
| | | JP | 7455905 B2 | 26-03-2024 |
| | | JP | 2020517012 A | 11-06-2020 |
| | | JP | 2022132349 A | 08-09-2022 |
| | | JP | 2023014151 A | 26-01-2023 |
| | | KR | 20190138852 A | 16-12-2019 |
| | | KR | 20240014589 A | 01-02-2024 |
| | | US | 2018299953 A1 | 18-10-2018 |
| | | US | 2021333872 A1 | 28-10-2021 |
| | | US | 2022179488 A1 | 09-06-2022 |
| | | US | 2022382371 A1 | 01-12-2022 |
| | | WO | 2018191731 A1 | 18-10-2018 |
| US 2021358216 A1 | 18-11-2021 | US | 11113880 B1 | 07-09-2021 |
| | | US | 2021358216 A1 | 18-11-2021 |
| US 2017285736 A1 | 05-10-2017 | US | 2017285736 A1 | 05-10-2017 |
| | | US | 2019361526 A1 | 28-11-2019 |
| | | US | 2020301506 A1 | 24-09-2020 |
| | | US | 2021303067 A1 | 30-09-2021 |
| | | US | 2022197381 A1 | 23-06-2022 |
| | | US | 2024103620 A1 | 28-03-2024 |
| EP 3140719 B1 | 07-07-2021 | AU | 2015255652 A1 | 24-11-2016 |
| | | AU | 2015297035 A1 | 24-11-2016 |
| | | AU | 2015297036 A1 | 24-11-2016 |
| | | CN | 106462743 A | 22-02-2017 |
| | | CN | 106537290 A | 22-03-2017 |
| | | CN | 107087431 A | 22-08-2017 |
| | | EP | 3140719 A2 | 15-03-2017 |
| | | EP | 3140779 A1 | 15-03-2017 |
| | | EP | 3140780 A2 | 15-03-2017 |
| | | JP | 6550460 B2 | 24-07-2019 |
| | | JP | 2017526078 A | 07-09-2017 |
| | | JP | 2017526079 A | 07-09-2017 |
| | | JP | 2017527036 A | 14-09-2017 |
| | | KR | 20170045149 A | 26-04-2017 |
| | | KR | 20170046108 A | 28-04-2017 |
| | | KR | 20170047195 A | 04-05-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 15 2928

31-05-2024

| Patent document cited in search report | Publication date | Patent family member(s) | | Publication date |
|---|---|---|---|---|
| | | KR | 20200127267 A | 10-11-2020 |
| | | US | 2015324568 A1 | 12-11-2015 |
| | | US | 2015326570 A1 | 12-11-2015 |
| | | US | 2015338915 A1 | 26-11-2015 |
| | | US | 2016062459 A1 | 03-03-2016 |
| | | US | 2016085302 A1 | 24-03-2016 |
| | | US | 2016274660 A1 | 22-09-2016 |
| | | US | 2017235931 A1 | 17-08-2017 |
| | | WO | 2015172124 A1 | 12-11-2015 |
| | | WO | 2016018487 A2 | 04-02-2016 |
| | | WO | 2016018488 A2 | 04-02-2016 |

EPO FORM P0459